# EUROPEAN PATENT APPLICATION

(11) **EP 1 898 609 A1**
(43) Date of publication of application: **12.03.2008**
(21) Application number: 07017488.3
(22) Date of filing: 06.09.2007
(51) Int. Cl.: H04M 1/04, G06F 1/16, A47B 23/04

(54) **Portable folding-type cradle**

(30) Priority: 08.09.2006 KR 20060086802
(71) Applicant: Samsung Electronics Co., Ltd., Suwon-si, Gyeonggi-Do (KR)
(72) Inventor: Park, Min-Sang, Suwon-si Gyeonggi-do (KR); Ahn, Seng-Ho, Suwon-si Gyeonggi-do (KR)
(74) Representative: Lang, Johannes

(57) **Abstract**

A portable folding-type cradle is provided. The portable folding-type cradle includes a first cradle body, a second cradle body which is folded to or unfolded from the first cradle body, a hinge unit which couples the second cradle body to the first cradle body, a locking means which is fonned in the hinge unit and gradually locks the folded state of the second cradle body by interference according to the extent of rotation of the second cradle body. At least one means is provided in the first cradle body to stably support the cradled state of a portable terminal by preventing sliding of the portable terminal and to adjust the inclination of the portable terminal in the cradled state.

## Description

### BACKGROUND OF THE INVENTION

### 1. Field of the Invention:

The present invention generally relates to a portable terminal such as a Digital Multimedia Broadcasting (DMB) phone, a game phone, a camera phone, a Personal Digital Assistant (PDA), or a Hand Held Phone (HHP). More particularly, the present invention relates to a portable folding-type cradle useful for watching moving pictures.

### 2. Description of the Related Art:

In general, a "portable terminal" is an electronic apparatus carried by a user to perform wireless communication. In terms of portability, such portable terminals tend to be compact, slim, and light and are easy to hold. Portable terminals also typically include multimedia functions. Future portable terminals are expected to incorporate greater multi-functionality and multi-purpose utilization. Future portable communication apparatuses will also be more compact and light and will be modified to be suitable for various multimedia environments or Internet environments.

Conventional portable terminals may be classified into various types according to their appearance, such as bar-type portable terminals, flip-type portable terminals, and folder-type portable terminals. Further, portable terminals may be classified as neck wearable type terminals and wrist wearable type terminals according to the position where a user wears the portable terminal. Additionally, portable terminals may be classified as rotation-type portable terminals and sliding-type portable terminals based upon the way the portable terminals are opened or closed. These variously classified portable terminals can be easily understood by those skilled in the art.

Conventional portable terminals typically transmit data at a high speed in addition to performing voice communication. For example, because of increased demand by consumers, portable terminals tend to provide service using a wireless communication technology capable of transmitting data at a high speed.

At present, users can view various moving pictures in a Digital Multimedia Broadcasting (DMB) mode using portable terminals and enjoy a variety of games or entertainment in a multimedia environment using portable terminals.

However, since conventional portable terminals do not provide a separate cradle during watching of moving pictures, for example, in the DMB mode, users may be uncomfortable when watching moving pictures using the portable terminals at a position such as sitting in front of a table.

Generally, a cradle for a portable terminal also serves as a charger. A typical charger charges the portable terminal while it is cradled on the charger and is either perpendicular to or inclined with respect to the charger. When the portable terminal is cradled on the charger, the inclination of the portable terminal cannot be adjusted.

Moreover, it is not easy to carry the charger for cradling the portable terminal all the time because the charger is large. As a result, there is a need for a cradle having a simple cradling function which can be carried conveniently.

Furthermore, the portable terminal is cradled vertically on a conventional cradle, but it cannot be cradled horizontally on the cradle. Depending on the circumstances, it may be more convenient for the user to view a screen displayed on a display device in the horizontal direction or in the vertical direction.

### SUMMARY OF THE INVENTION

An aspect of the present invention is to address at least the above problems and/or disadvantages and to provide at least the advantages described below. Accordingly, an aspect of the present invention is to provide a portable folding-type cradle that can be conveniently carried, together with a portable terminal, anytime and anywhere like an accessory.

Another aspect of the present invention is to provide a portable folding-type cradle that allows a user to conveniently view information displayed on a display device in a Digital Multimedia Broadcasting (DMB) mode, thereby allowing the user to watch moving pictures in a comfortable position.

Another aspect of the present invention is to provide a portable folding-type cradle on which many types of portable terminals can be cradled.

Another aspect of the present invention is to provide a portable folding-type cradle on which many types of portable terminals can be cradled horizontally or vertically, thereby increasing convenience.

Another aspect of the present invention is to provide a portable folding-type cradle that has a simple structure and is easy to manipulate so that it is easy to assemble, convenient to carry, and economical.

Another aspect of the present invention is to provide a portable folding-type cradle that is made of synthetic resin, contributing to a light weight.

Another aspect of the present invention is to provide a portable folding-type cradle, in which a first cradle body and a second cradle body are completely assembled with each other through a single assembly process, contributing to cost reduction.

Another aspect of the present invention is to provide a portable folding-type cradle, in which the second cradle body is gradually locked by interference according to the extent of rotation of the second cradle body.

In accordance with an aspect of the present invention, a cradle for a portable terminal is provided. The cradle includes a first cradle body, a second cradle body which is folded to or unfolded from the first cradle body, a hinge unit which couples the second cradle body to the first cradle body, a locking means which is formed in the hinge unit and gradually locks the folded state of the second cradle body according to the extent of rotation of the second cradle body, and at least one means provided in the first cradle body to stably support the cradled state of the portable terminal by preventing sliding of the portable terminal and to adjust the inclination of the portable terminal in the cradled state.

### BRIEF DESCRIPTION OF THE DRAWINGS

The above and other aspects, features and advantages of the present invention will become more apparent from the following detailed description of certain exemplary embodiments when taken in conjunction with the accompanying drawings in which:
- FIG. 1: is a perspective view illustrating a portable folding-type cradle that is folded according to an exemplary embodiment of the present invention;
- FIG. 2: is a perspective view illustrating a portable folding-type cradle that is unfolded according to an exemplary embodiment of the present invention;
- FIG. 3: is an exploded perspective view illustrating a portable folding-type cradle according to an exemplary embodiment of the present invention; and
- FIG. 4: is a perspective view illustrating a state in which a portable terminal is cradled at an incline on a portable folding-type cradle according to an exemplary embodiment of the present invention.

Throughout the drawings, like reference numerals will be understood to refer to like parts, components and structures.

### DETAILED DESCRIPTION OF EXEMPLARY EMBODIMENT

The following description with reference to the accompanying drawings is provided to assist in a comprehensive understanding of the exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

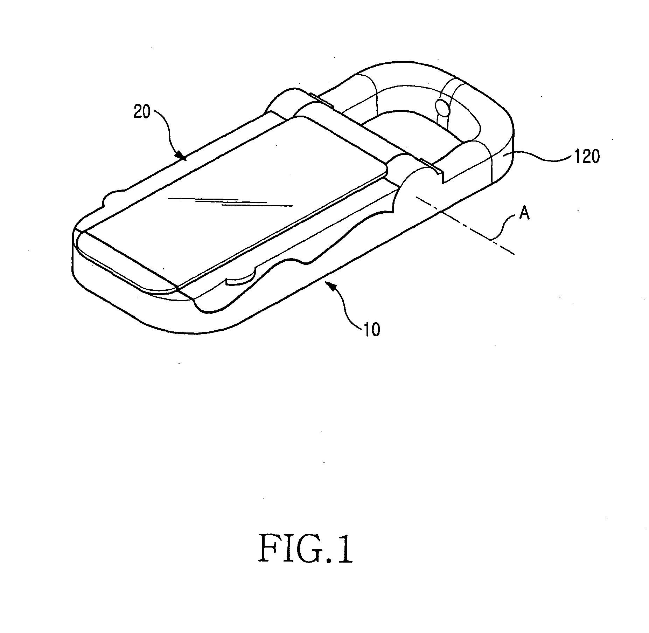

As illustrated in FIGs. 1 through 3, a cradle according to an exemplary embodiment of the present invention is a folding type cradle and is sized so that it is convenient to carry. More specifically, the cradle includes a first cradle body 10, a second cradle body 20, a hinge unit 30, a locking means 40 for maintaining a folded state of the second cradle body 20, and at least one means for stably supporting a portable terminal in a cradled position in the first cradle body 10 and the second cradle body 20.

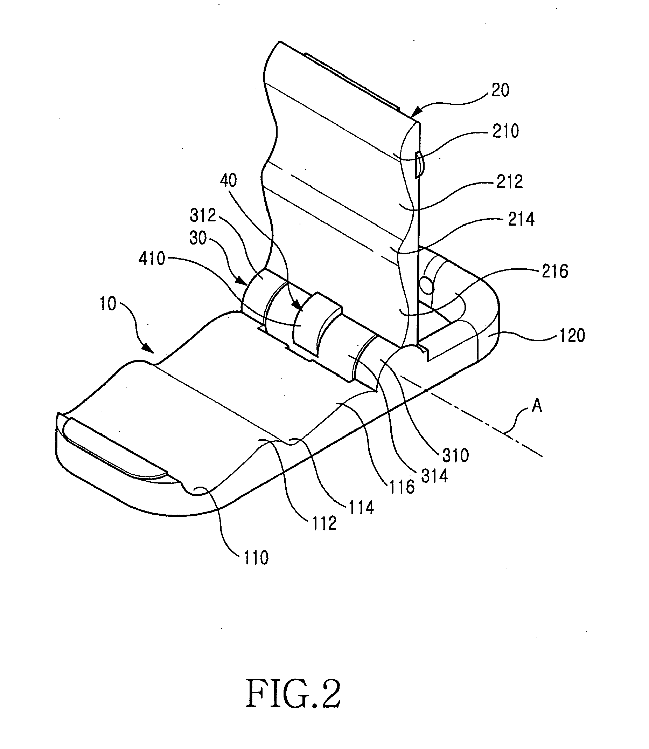

The second cradle body 20 is rotatably coupled to the first cradle body 10 by the hinge unit 30 and thus may be folded to or unfolded from the first cradle body 10. FIG. 1 illustrates a state in which the second cradle body 20 is folded to the first cradle body 10 and FIG. 2 illustrates a state in which the second cradle body 20 is unfolded from the first cradle body 10. The hinge unit 30 provides a hinge axis A for the second cradle body 20.

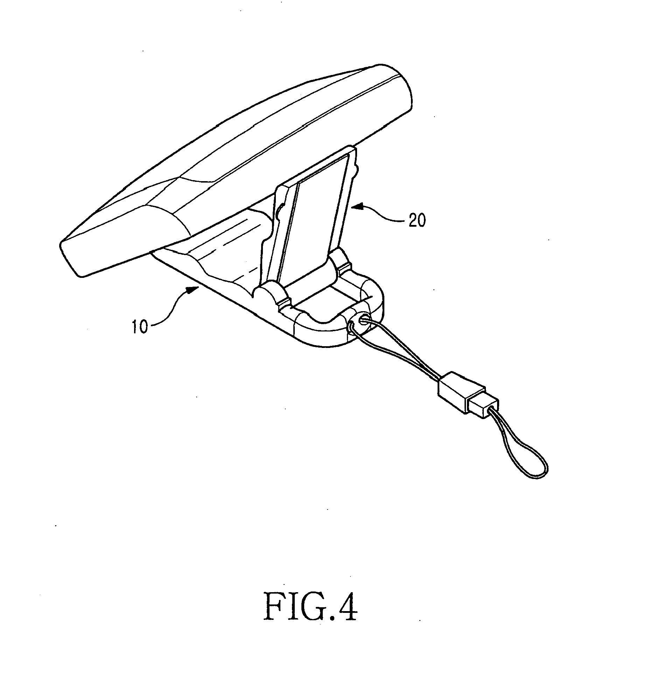

The at least one means for supporting a portable terminal provided in the first cradle body 10 contacts a predetermined portion of the portable terminal to prevent the cradled portable terminal from sliding to the ground, thereby stably supporting the portable terminal in an inclined state. The at least one means for supporting a portable terminal may directly contact the portable terminal. The means also allows adjustment of the cradled state of the portable terminal, specifically the inclination of the cradled portable terminal. FIG. 4 illustrates a state in which the portable terminal is cradled at an incline.

The means include at least one set of first convex and concave portions 110, 112, 114, and 116. For the first convex and concave portions, concave portions 110 and 114 and convex portions 112 and 116 are provided by turns and are substantially parallel with the hinge axis A. The cross sections of the first convex and concave portions 110, 112, 114, and 116 are gently curved waves in shape.

The second cradle body 20 includes at least one set of second convex and concave portions 210, 212, 214, and 216. For the second convex and concave portions, concave portions 212 and 216 and convex portions 210 and 214 are provided by turns and are substantially parallel with the hinge axis A. The cross sections of the second convex and concave portions 210, 212, 214, and 216 are gently curved waves in shape.

As shown in FIGs. 1 and 2, when the second cradle body 20 is completely folded to the first cradle body 10, the convex portions 210 and 214 of the second convex and concave portions are inserted into the concave portions 110 and 114 of the first convex and concave portions and the convex portions 112 and 116 of the first convex and concave portions are inserted into the concave portions 212 and 216 of the second set of convex and concave portions. In other words, since the first convex and concave portions and the second convex and concave portions have matching shapes, when the second cradle body 20 is completely folded to the first cradle body 10, the thickness of the folded cradle can be minimized. As such, the first set of convex and concave portions and the second set of convex and concave portions have multiple functions, such as stably supporting the cradled position of the portable terminal, contributing to minimizing the thickness of the folded cradle, thereby providing a slim body, and adjusting the inclination of the cradled portable terminal through the plurality of first convex and concave portions 110, 112, 114, and 116.

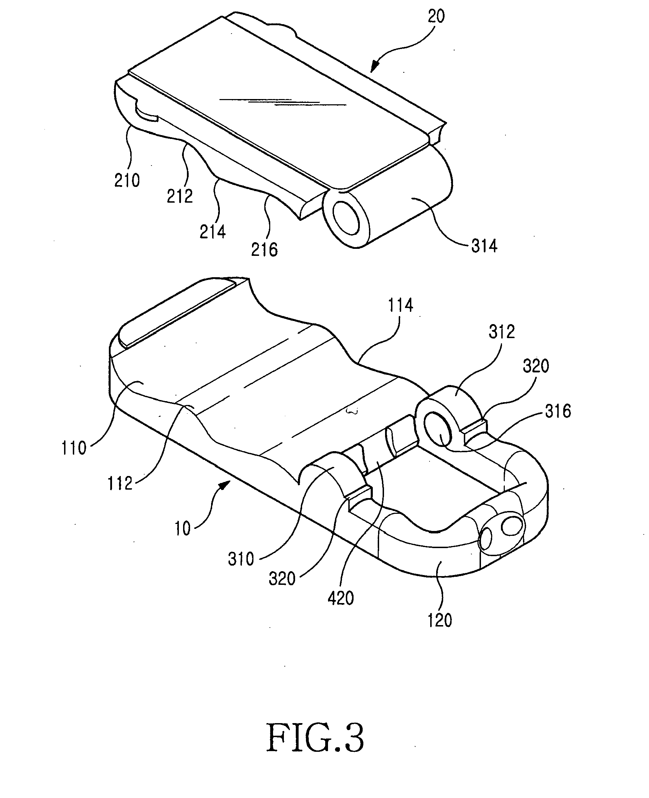

When the second cradle body 20 is rotated away from the first cradle body 10 so that the second cradle body 20 may cradle the portable terminal, the first cradle body 10 should be supported by the ground and should support the inclined state of the second cradle body 20. In the exemplary embodiment of the present invention, the first cradle body 10 further includes a support means for supporting the inclined state of the second cradle body 20. The support means includes at least one stopper 320 (see FIG. 3). In the illustrated embodiment, two stoppers 320 are provided and are formed as protrusions at the rear of the hinge unit 30. The stoppers 320 form a pair and are positioned symmetrically with respect to each other. The rotation of the second cradle body 20 is restricted by the stoppers 320 and is finally stopped as illustrated in FIG. 2.

The amount of rotation of the second cradle body 20 is adjusted according to the shapes or positions of the stoppers 320, thereby adjusting the cradled state of the portable terminal, specifically the inclination of the cradled portable terminal.

As described above, the portable terminal can be cradled at an incline on the cradle. To this end, as illustrated in FIG. 4, a predetermined portion of the portable terminal directly contacts or is inserted into the concave portions 110 or 114 of the first concave and convex portions of the first cradle body 10, thus preventing the cradled portable terminal from sliding to the ground, and contacts a selected portion between the concave portions 110 and 114, thus adjusting the inclined state of the cradled portable terminal. The first concave and convex portions of the first cradle body 10 primarily maintain the cradled state of the portable terminal and the second concave and convex portions of the second cradle body 20 secondarily maintain the cradled state of the portable terminal. When the predetermined portion of the portable terminal is supported by the concave portion 110 that is away from the hinge unit 30, the portable terminal is cradled at a gentle inclination. In contrast, when the predetermined portion of the portable terminal is supported by the concave portion 114 that is close to the hinge unit 30, the portable terminal is cradled at a sharp inclination.

The locking means 40 formed in the hinge unit 30 locks the folded state of the second cradle body 20 according to rotation of the second cradle body 20. The locking means 40 includes an opening 420 (see FIG. 3) having a predetermined shape between the first cradle body 10 and the hinge unit 30 and a locker 410 (see FIG. 2) which is formed in the hinge unit 30 and disposed inside the opening 420 and gradually increases the extent of locking through mutual interference with the opening 420 according to the rotation of the second cradle body 20. The locker 410 is formed at a predetermined position of the outer circumferential face of a center hinge arm 314 of the hinge unit 30 in such a way that its protruding height gradually increases. In other words, the protruding height of the locker 410 gradually increases as the amount of rotation of the second cradle body 20 increases.

As illustrated in FIGs. 2 and 3, a pair of side hinge arms 310 and 312, hinge protrusions 316 that protrude towards each other in the inner sides of the side hinge arms 310 and 312, and the center hinge arm 314 combined with the side hinge arms 310 and 312 by the hinge protrusions 316 are included in the first cradle body 10. The side hinge arms 310 and 312, the hinge protrusion 316, and the center hinge arm 314 are cylindrical in shape.

As illustrated in FIG. 3, the first cradle body 10 further includes a connection ring 120 that may be injection molded as one piece with the first cradle body 10 at the rear of the first cradle body 10, specifically of the hinge unit 30. Since the connection ring 120 may be injection molded as one piece with the first cradle body 10, an engagement process using a separate engagement opening is not required, thereby improving the efficiency of assembly.

FIG. 4 is a perspective view illustrating a state in which the portable terminal is cradled horizontally on the cradle. This state allows the user to use a landscape mode of a display device of the portable terminal. The portable terminal can also be cradled vertically on the cradle.

The portable folding-type cradle is made of light synthetic resin and may be provided in various and brilliant colors since the cradle functions as an accessory of the portable terminal.

As described above, the cradle according to the exemplary embodiment of the present invention can be conveniently carried like an accessory and thus can be carried together with the portable terminal for use anytime and anywhere. The cradle includes a plurality of concave and convex portions to support the cradled state of the portable terminal and contribute to a reduced size of the cradle by minimizing the thickness of the cradle. Moreover, the inclination of the cradled portable terminal can be adjusted and the portable terminal can be cradled horizontally or vertically as desired by the user. Furthermore, since the cradle according to the exemplary embodiment of the present invention is a folding type cradle with a simple structure, it is simple to manufacture, it is economical and easy to use, and many types of terminals can be cradled on the cradle. The cradle according to the exemplary embodiment of the present invention is useful for watching moving pictures, for example, for a DMB mode.

While the present invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A cradle for a portable terminal, the cradle comprising:
a first cradle body;
a second cradle body;
a hinge unit that couples the second cradle body to the first cradle body so that the second cradle body may be folded to or unfolded from the first cradle body, the hinge unit having a hinge axis;
a lock to lock the folded state of the second cradle body according to the extent of rotation of the second cradle body; and
at least one means provided in the first cradle body for stably supporting the cradled state of the portable terminal by preventing sliding of the portable terminal, and for adjusting the inclination of the portable terminal in the cradled state.

2. The cradle of claim 1, wherein the at least one means comprises at least one set of first concave and convex portions that are provided on a top surface of the first cradle body, in which the first concave and convex portions are wave shaped and extend substantially parallel to the hinge axis, and the second cradle body includes at least one set of second concave and convex portions that are wave shaped and extend substantially parallel to the hinge axis.

3. The cradle of claim 2, wherein when the second cradle body is folded to the first cradle body, convex portions of the first concave and convex portions are inserted into concave portions of the second concave and convex portions and convex portions of the second concave and convex portions are inserted into concave portions of the first concave and convex portions, thereby contributing to slimness of the cradle.

4. The cradle of claim 1, further comprising a support to support the inclined state of the second cradle body at a predetermined position of the hinge unit in the first cradle body.

5. The cradle of claim 1, wherein the lock comprises:
an opening formed between the first cradle body and the hinge unit; and
a locker formed in the hinge unit and disposed inside the opening, the locker gradually increasing the extent of locking through mutual interference with the opening according to rotation of the second cradle body.

6. The cradle of claim 5, wherein the locker is formed on the outer circumferential face of the hinge unit so that that a protruding height of the locker gradually increases.

7. The cradle of claim 1, wherein the hinge unit comprises:
a pair of cylindrical side hinge arms disposed on the first cradle body;
cylindrical hinge protrusions disposed on the inner sides of the side hinge arms; and
a cylindrical center hinge arm that is disposed on the second cradle body and is combined with the side hinge arms by the hinge protrusions.

8. The cradle of claim 1, wherein the first cradle body further comprises a connection ring disposed at a rear portion of the first cradle body.

9. The cradle of claim 8, wherein the connection ring and the first cradle portion are injection molded as one piece.

10. A cradle for a portable terminal, comprising:
a first cradle body having a top surface with at least one concave and convex portion;
a second cradle body hinged to the first cradle body so that the second cradle body may be opened and closed with respect to the first cradle body, the second cradle body having a bottom surface with at least one concave and convex portion.

11. The cradle of claim 10, further comprising:
a hinge for connecting the first and second cradle bodies, the hinge having a hinge axis, and
wherein the concave and convex portions of the first and second cradle bodies are substantially parallel to the hinge axis.

12. The cradle of claim 10, wherein the concave and convex portions of the first and second cradle bodies are complementary so that when the second cradle body is closed with respect to the first cradle body the concave and convex portions mesh with one another, thereby contributing to slimness of the cradle.

13. The cradle of claim 10, further comprising a lock to lock the folded state of the second cradle body according to the extent of rotation of the second cradle body.

14. The cradle of claim 13, wherein the lock comprises:
an opening formed between the first cradle body and the hinge unit; and
a locker formed in the hinge unit and disposed inside the opening, the locker gradually increasing the extent of locking through mutual interference with the opening according to rotation of the second cradle body.

15. A cradle for a portable terminal, the cradle comprising:
a first cradle body having a top surface with at least one set of first concave and convex portions;
a second cradle body having a bottom surface with at least one set of second concave and convex portions; and
a hinge unit that couples the second cradle body to the first cradle body so that the second cradle body may be folded to or unfolded from the first cradle body, the hinge unit having a hinge axis,
wherein the first and second concave and convex portions are wave shaped and extend substantially parallel to the hinge axis so that they support a portable terminal by preventing sliding of the portable terminal and adjust the inclination of the portable terminal.

16. The cradle of claim 15, wherein when the second cradle body is folded to the first cradle body, convex portions of the first concave and convex portions are inserted into concave portions of the second concave and convex portions and convex portions of the second concave and convex portions are inserted into concave portions of the first concave and convex portions, thereby contributing to slimness of the cradle.

17. The cradle of claim 15, further comprising a support to support the inclined state of the second cradle body at a predetermined position.

18. The cradle of claim 15, further comprising a lock to lock the folded state of the second cradle body according to the extent of rotation of the second cradle body.

19. The cradle of claim 18, wherein the lock comprises:
an opening formed between the first cradle body and the hinge unit; and
a locker disposed in the hinge unit and disposed inside the opening, the locker gradually increasing the extent of locking through mutual interference with the opening according to rotation of the second cradle body.

20. The cradle of claim 19, wherein the locker is formed on the outer circumferential face of the hinge unit so that that a protruding height of the locker gradually increases.
